# FASCICULE DE BREVET EUROPEEN

(11) **EP 3 881 101 B1**
(45) Date de publication et mention de la délivrance du brevet: **21.12.2022**
(21) Numéro de dépôt: 19801890.5
(22) Date de dépôt: 15.11.2019
(51) Int. Cl.: G01S 7/521, G10K 11/00, G08C 15/02, H04B 3/56, H04L 5/06

(54) **MULTIPLEXEUR DE SIGNAUX POUR SONAR**
SIGNALMULTIPLEXER FÜR SONAR
SIGNAL MULTIPLEXER FOR SONAR

(30) Priorité: 15.11.2018 FR 1871858
(43) Date de publication de la demande: 22.09.2021
(73) Titulaire: THALES, 92400 Courbevoie (FR)
(72) Inventeur: CORBEL, Philippe, 29200 BREST (FR)
(74) Mandataire: Atout PI Laplace
(86) Numéro de dépôt international: PCT/EP2019/081527
(87) Numéro de publication internationale: WO 2020/099655

(56) Documents cités:
- US-A- 4 193 129
- SHEFTER A P ED - INSTITUTE OF ELECTRICAL AND ELECTRONICS ENGINEERS: "ROV AND REMOTE DATA GATHERING CONTROL, COMMUNICATIONS, AND POWER SUPPLY OVER A SINGLE INEXPENSIVE COAXIAL CABLE USING A LOW POWER MULTIPLEX SYSTEM", ENGINEERING IN HARMONY WITH THE OCEAN. VICTORIA, OCT. 18 - 21, 1993; [PROCEEDINGS OF THE OCEANS CONFERENCE], NEW YORK, IEEE, US, vol. 3, 18 octobre 1993 (1993-10-18), pages III-236, XP000509547, ISBN: 978-0-7803-1386-6
- MANOJ G ET AL: "Design, Simulation and Comparison of Mixing Schemes for DC, AC and Bidirectional Data through Coaxial Cable", PROCEDIA COMPUTER SCIENCE, ELSEVIER, AMSTERDAM, NL, vol. 93, 12 août 2016 (2016-08-12), pages 578-584, XP029684137, ISSN: 1877-0509, DOI: 10.1016/J.PROCS.2016.07.303
- Thales: "FLASH Dipping Sonar Folding Light Acoustic System for Helicopter", , 1 janvier 2012 (2012-01-01), XP055625687, Extrait de l'Internet: URL:http://www.thales7seas.com/html_2014/p roducts/214/thales_Flash_Dipping_Sonar.pdf [extrait le 2019-09-24]

## Description

L'invention se situe dans le domaine des équipements SONAR (acronyme anglais de *SOund NAvigation and Ranging),* et traite plus particulièrement des sonars composés de deux parties reliées entre elles par un câble chargé d'assurer l'échange de signaux.

Les sonars sont des dispositifs utilisant les propriétés de la propagation du son dans l'eau pour détecter et localiser des objets sous-marins. Ils sont utilisés notamment dans le domaine de la défense pour la détection de sous-marins ou de mines.

Les sonars sont souvent composés de deux parties :
- une première partie dite émergée, généralement localisée à bord d'un équipement de surface tel qu'un bateau ou un aéronef. On entend par partie émergée le fait qu'elle ne soit pas destinée à être plongée dans l'eau. Cela ne la rend pas incompatible d'une utilisation dans un bâtiment immergé, tel qu'un sous-marin. Cette partie réalise au moins la génération des signaux de puissance émis par la partie immergée du sonar et d'un signal permettant l'alimentation électrique de la partie immergée. Elle comprend également l'électronique nécessaire à l'échange de données de communication avec la partie immergée. Avantageusement, elle peut disposer de l'électronique numérique nécessaire à l'analyse des signaux acquis par la partie immergée pour la détection de sources ;
- une deuxième partie dite immergée car elle est destinée à être immergée pour transmettre sous l'eau les signaux sonar. Cette partie est principalement constituée de transducteurs acoustiques permettant l'émission et la réception de signaux sous-marins. Elle également comprend l'électronique nécessaire pour l'acquisition des signaux sous-marins, leur numérisation et leur transmission à la partie émergée.

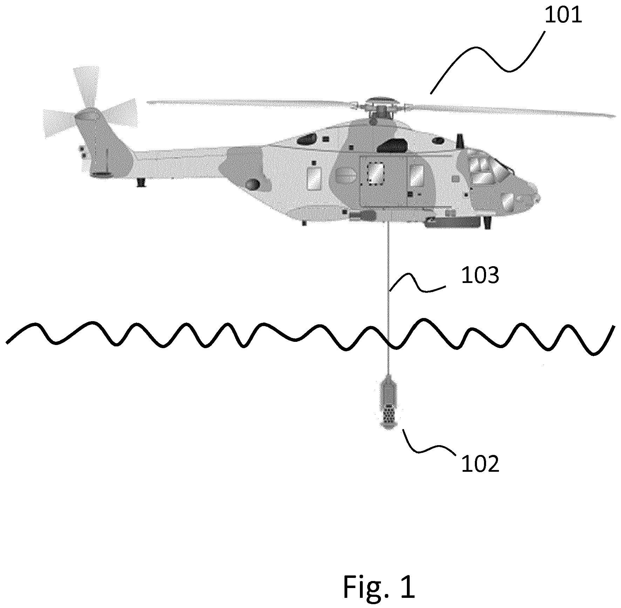

La figure 1 représente un exemple de sonar à deux parties pour la détection de sous-marins, lorsqu'embarqué dans un hélicoptère. La partie émergée du sonar est positionnée à l'intérieur de l'hélicoptère 101, tandis que la partie immergée 102 est sous la mer, à des profondeurs pouvant atteindre quelques centaines de mètres. Les deux parties sont reliées par un câble électroporteur 103. Ce câble s'enroule autour d'un treuil placé à bord de l'hélicoptère permettant de monter/descendre la partie immergée du sonar, et de la maintenir en position. Le câble 103 est armé, c'est-à-dire que sa structure est renforcée de manière à supporter le poids de la partie immergée et son propre poids. La longueur du câble peut atteindre quelques centaines de mètres. A titre d'illustration, Thales développe un Sonar appelé Sonar Flash, pour lequel la partie immergée de l'équipement est reliée à la partie émergée par un câble coaxial de plus de 700 mètres.

Le câble électroporteur assure donc le maintien de la partie immergée du sonar, et sert de support à la transmission de signaux électriques. Trois types de signaux sont généralement transmis entre les deux parties du sonar:
- des signaux à émettre, signaux analogiques de puissances élevées. Ces signaux sont générés par la partie émergée, et sont destinés à être émis par les transducteurs acoustiques de la partie immergée. A titre d'illustration, dans le cas du Sonar Flash, les signaux émis présentent une puissance de 10 kW sous une tension de 2500 V efficaces en alternatif,
- un signal d'alimentation électrique, assurant la fourniture de l'énergie électrique pour la partie immergée du sonar. Ce signal est généralement un signal en courant continu ou un signal alternatif basse fréquence (50 Hz à 400 Hz),
- un signal bidirectionnel permettant la transmission de données communication entre les deux parties du sonar, transmettant entre autres dans un sens les données de gestion et contrôle/commande de la partie immergée, et dans l'autre sens des informations sur l'état de la partie immergée du sonar et les signaux acquis numérisés.

Les sonars hélitreuillés de l'état de l'art, comme par exemple le Sonar Flash, utilisent un câble électroporteur coaxial comme support pour la transmission des différents signaux. Ils sont transmis successivement sur le câble, qui est ainsi partagé temporellement entre les différentes fonctions. Cependant, un tel multiplexage temporel entraine des coupures sur chacun des signaux, en particulier sur le signal d'alimentation électrique. Des équipements dédiés à assurer la continuité des signaux, comme des dispositifs de stockage de l'énergie (batteries) pour le signal d'alimentation électrique, doivent alors être mis en œuvre dans la partie immergée. Des éléments de commutation de puissance actifs, comme des relais de puissance, doivent également être mis en œuvre dans la partie immergée et constituent des sources de non fiabilité. Tout ceci se répercute sur la masse et le volume de la partie immergée, et donc sur le diamètre du câble électroporteur, ainsi que sur le volume et la masse de l'ensemble. Il est donc souhaitable de disposer d'une solution qui permette de réduire la masse et le volume de la partie immergée, tout en améliorant sa fiabilité.

En outre, le débit moyen du signal transportant les données de communication est limité en fonction des ressources temporelles qui lui sont attribuées. Les progrès en termes de miniaturisation des composants et l'augmentation des puissances de calculs pour le traitement des signaux font que les sonars embarquent de plus en plus de capteurs. Les besoins en quantités de données transportées augmentent alors en conséquence. Il convient donc de trouver une solution permettant d'augmenter les débits moyens de ce signal.

Le problème posé est donc triple : alléger le dispositif, augmenter sa fiabilité et augmenter le débit attribué au signal transportant les données de communication.

Deux documents donnent des informations sur la transmission de signaux sur un câble coaxial sans divulguer l'invention :
- Shefter A P ED - Institute of Electrical and Electronics Engineers: "Rov and remote data gathering control, communications, and power supply over a single inexpensive coaxial cable using a low power multiplex system", Engineering in harmony with the ocean. Victoria, du 18 au 21 octobre 1993 - proceedings of the océans conference, New York, IEEE, US - Vol 3, 18 octobre 1993, page III-236 - ISBN 978-0-7803-1386-6
- Manoj G et A: "Design, simulation and comparison of mixing schemes for DC, AC and Bidirectional data through coaxial cable" Procedia Computer Science, Elsevier, Amsterdam, NL - Vol 93, 12 août 2916, pages 578-584 - ISSN: 1877-0509, DOI: 10.1016/J.PROCS.2016.07.303.

Pour augmenter le débit du signal transportant les données de communication, il serait possible de disposer plusieurs lignes de transmission en parallèle au sein du câble, un par type de signal, au lieu d'une unique ligne de transmission. Cela permettrait de supprimer les dispositifs de commutation de puissance et de stockage d'énergie de la partie immergée. Cependant, en augmentant le nombre de lignes de transmission, la section du câble et sa masse augmenteraient, ce qui poserait le problème de l'encombrement du touret nécessaire pour enrouler le câble sur toute sa longueur, ainsi que le problème des contraintes mécaniques exercées sur le câble et le touret. Cette solution n'est donc pas adaptée, en particulier lorsque le sonar est embarqué dans un hélicoptère.

Afin de répondre au problème posé tout en résolvant les problèmes soulevés par l'art antérieur, l'invention propose de transmettre de manière continue et simultanée l'ensemble des signaux (alimentation électrique, émissions et données de communication) en combinant les différents signaux, chaque type de signal utilisant une bande de fréquence qui lui est propre. Une telle combinaison n'est pas considérée dans l'art antérieur car elle revient à transmettre sur un même support des signaux hétérogènes ayant des caractéristiques très différentes : des signaux de forte puissance, comme les signaux destinés à être émis par la partie immergée et dont la tension peut atteindre plusieurs milliers de volts et la puissance plusieurs dizaines de kilowatts, avec des signaux de plus faible puissance, comme le signal transportant les données de communication. Ces signaux, de par leurs puissances différentes et leurs bandes de fréquences différentes, font peser des contraintes très différentes et non nécessairement compatibles sur les composants utilisés dans le sonar.

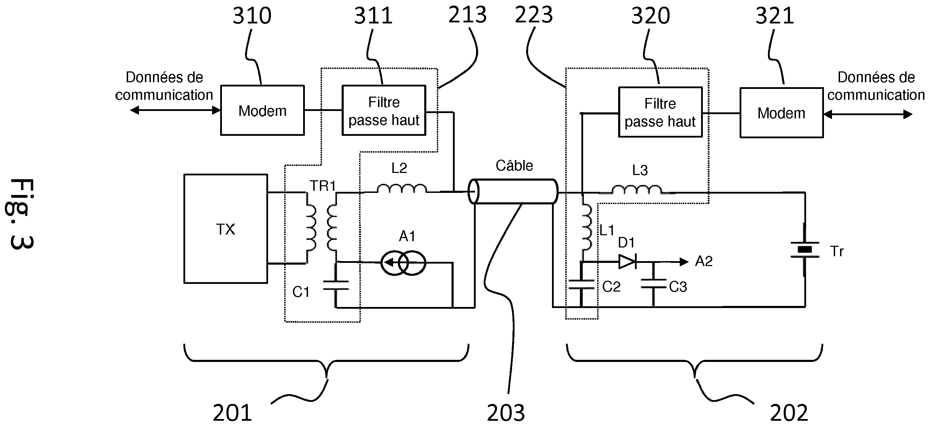

Pour mélanger les différents signaux transmis sur le câble électroporteur, l'invention propose de mettre en œuvre d'une part des moyens de combinaison et d'autre part des moyens de séparation des signaux. Un exemple pratique de mise en œuvre d'un tel dispositif, optimisé de manière à réduire la masse et le volume de la deuxième partie du sonar, est donné à la figure 3 et décrit en détails.

A cet effet, l'invention porte sur un sonar comprenant une première partie et une deuxième partie reliées par un câble électroporteur configuré pour supporter mécaniquement la deuxième partie et permettre aux deux parties du sonar d'échanger des signaux. Les signaux transmis comprennent :
- un signal unidirectionnel dit signal d'alimentation électrique, par lequel la première partie transmet une alimentation électrique à la deuxième partie,
- des signaux unidirectionnels analogiques dits signaux à émettre, transmis par la première partie à la deuxième partie en vue de leur émission sous forme d'ondes acoustiques, et
- un signal bidirectionnel transportant des données de communication échangées entre les deux parties.
Dans le sonar selon l'invention, la première partie comprend des moyens de combinaison des signaux, configurés pour que le signal d'alimentation électrique, les signaux à émettre et le signal transportant des données de communications soient transmis simultanément et dans des bandes de fréquences différentes sur le câble électroporteur. En outre, la deuxième partie comprend des moyens de séparation permettant la récupération de chacun des signaux transmis sur le câble électroporteur un ou plusieurs transducteurs acoustiques d'émission (Tr), et des moyens d'accord/adaptation (L1) du ou des transducteurs acoustiques d'émission.

Avantageusement, le câble électroporteur comprend une seule ligne de transmission.

Dans un mode de réalisation, les moyens de combinaison comprennent des composants configurés pour coupler les signaux à émettre avec le signal d'alimentation électrique. Ces composants peuvent avantageusement comprendre un transformateur configuré pour élever la tension des signaux à émettre et les coupler avec le signal d'alimentation électrique. Ils peuvent également comprendre des composants configurés pour guider la propagation des signaux en direction du câble électroporteur. Dans un mode de réalisation, les composants configurés pour guider la propagation des signaux en direction du câble électroporteur comprennent :
- une inductance configurée pour laisser passer le signal d'alimentation électrique et les signaux à émettre et pour restreindre la propagation du signal transportant les données de communications, ladite inductance étant raccordée entre d'une part le câble électroporteur, et d'autre part des éléments de génération des signaux à émettre et de génération du signal d'alimentation électrique, et
- un filtre configuré pour laisser passer le signal transportant les données de communications et pour restreindre la propagation du signal d'alimentation électrique et des signaux à émettre, ledit filtre étant raccordé entre le câble électroporteur et un générateur du signal transportant les données de communications.

Avantageusement, les moyens de séparation comprennent une inductance configurée pour à la fois séparer le signal d'alimentation électrique des autres signaux transportés par le câble électroporteur et réaliser l'accord/adaptation du ou des transducteurs acoustiques. Dans un mode de réalisation, cette inductance est montée en parallèle du ou des transducteurs acoustiques et est raccordée entre le câble électroporteur et une capacité avec laquelle elle est montée en série, le signal d'alimentation électrique étant récupéré aux bornes de ladite capacité.

Avantageusement, l'inductance est configurée pour laisser passer le signal d'alimentation électrique et pour restreindre la propagation du signal transportant les données de communications et les signaux à émettre.

Dans un mode de réalisation du sonar selon l'invention, les moyens de séparation comprennent :
- une inductance configurée pour laisser passer les signaux à émettre et pour restreindre la propagation du signal transportant les données de communications, ladite inductance étant raccordée entre le câble électroporteur et le ou les transducteurs acoustiques d'émission, et
- un filtre configuré pour laisser passer le signal transportant les données de communications et pour restreindre la propagation du signal d'alimentation électrique et des signaux à émettre, ledit filtre étant raccordé entre le câble électroporteur et l'élément de modulation/démodulation du signal transportant les données de communications.

Dans le sonar selon l'invention, le signal d'alimentation électrique peut être compris dans une portion du spectre allant de 0 à 400Hz, les signaux à émettre peuvent être compris dans une portion du spectre allant de 1kHz à 200kHz et le signal transportant les données de communication peut être compris dans une portion du spectre supérieure à 200kHz.

Dans un mode de réalisation du sonar selon l'invention le signal transportant les données de communication est modulé par une modulation à moyenne nulle. Avantageusement, la modulation utilise un multiplexage par répartition en fréquences orthogonales, ou OFDM (sigle anglais pour *Orthogonal Frequency Division Multiplexing,* ou multiplexage orthogonal par répartition en fréquence).

### DESCRIPTION :

L'invention sera mieux comprise et d'autres caractéristiques et avantages apparaîtront mieux à la lecture de la description qui suit, donnée à titre non limitatif, et grâce aux figures annexées parmi lesquelles :
- La figure 1 présente un exemple de sonar hélitreuillé composé de deux parties,
- La figure 2 représente un mode de réalisation d'un sonar selon l'invention,
- La figure 3 représente un mode de réalisation avantageux d'un sonar selon l'invention.

Par la suite, lorsque des mêmes références sont utilisées dans des figures différentes, elles désignent les mêmes éléments.

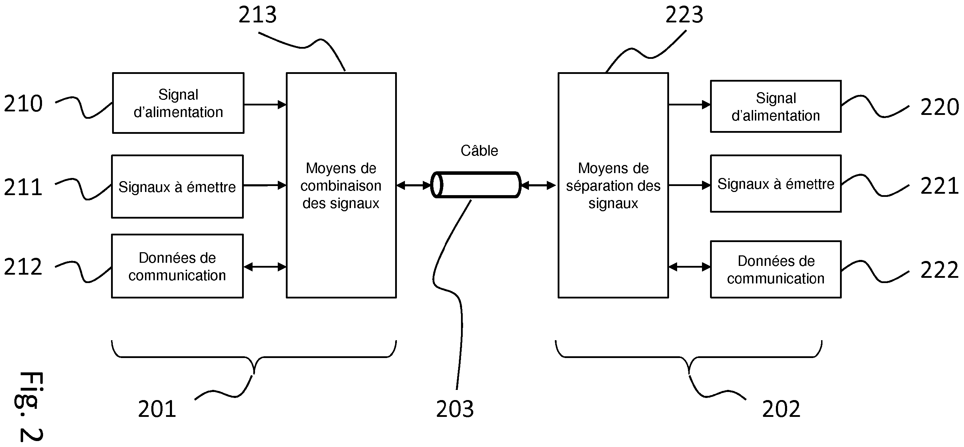

La figure 2 représente un mode de réalisation d'un sonar selon l'invention comprenant deux parties 201 et 202 séparées et reliés par un câble électroporteur 203. Le sonar présente une première partie 201, dite partie émergée, destinée à être embarquée à bord d'un bâtiment tel qu'un navire, un aéronef ou un sous-marin, et une deuxième partie 202, dite partie immergée, destinée à être plongée dans l'eau. Le câble électroporteur 203 assure une fonction de support mécanique de la deuxième partie 202, et une fonction de transmission de signaux entre les deux parties 201 et 202 à travers une même ligne de transmission, dont :
- un signal d'alimentation électrique 210. Ce signal est destiné à assurer le fonctionnement de la partie immergée du sonar. Il s'agit généralement d'un signal continu, mais peut tout aussi bien être un signal alternatif ayant une fréquence de quelques dizaines de Hz. Le signal peut être indifféremment généré par la partie émergée 201 du sonar lorsqu'il dispose de moyens de stockage d'énergie (batteries), ou fourni par une source d'alimentation électrique externe à laquelle le sonar est relié ;
- des signaux à émettre 211. Il s'agit de signaux électriques destinés à être émis sous l'eau par la partie immergée du sonar sous la forme d'ondes acoustiques. Ces signaux sont des signaux de puissances élevées transmis en Haute Fréquence (typiquement, du kHz à quelques centaines de kHz). Les signaux à émettre 211 véhiculent une puissance élevée pouvant atteindre plusieurs dizaines de kilowatts. Afin de limiter l'intensité du courant des signaux à émettre 211, la tension peut alors dépasser plusieurs milliers de volts. Les signaux à émettre sont générés par la première partie du sonar, puis transmis à la deuxième partie du sonar qui les émet grâce à des transducteurs acoustiques ; et
- un signal bidirectionnel de communication 212. Les données transmises sur la voie descendante (c'est-à-dire depuis la partie émergée 201 du sonar vers la partie immergée 202) correspondent essentiellement à des données de configuration, tandis que les données transmises sur la voie montante (c'est-à-dire depuis la partie immergée du sonar vers la partie émergée) correspondent principalement aux signaux acoustiques acquis, amplifiés et éventuellement numérisés par la partie immergée du sonar, ainsi qu'à des données sur l'état de cette partie. Les quantités de données transmises sur la voie montante et sur la voie descendante du signal bidirectionnel transportant les données de communication ne sont donc pas symétriques, le besoin en débit étant plus important sur la voie montante que sur la voie descendante. La partie émergée 201 du sonar dispose de l'électronique nécessaire à la génération (modulation, codage) et à la réception (démodulation, décodage) du signal transportant les données de communication. Les voies montantes et descendantes peuvent partager la même ressource spectrale, selon des méthodes connues de l'homme du métier comme le TDD (sigle anglais pour *Time-Division Duplex,* ou duplex par séparation temporelle), ou disposer chacun d'une bande de fréquence spécifiquement dédiée, selon des méthodes connues tel que le FDD (sigle anglais pour *Frequency-Division Duplex,* ou duplex par séparation fréquentielle). Ils sont transmis sur des fréquences porteuses plus élevées que les signaux 210 et 211.

La partie émergée 201 du sonar peut en outre disposer de moyens de calcul lui permettant de procéder à l'analyse des signaux acquis par la partie immergée du sonar.

Elle dispose également de moyens 213 permettant la combinaison des différents signaux. La fonction de ces moyens est d'assurer que le signal d'alimentation 210, les signaux à émettre 211 et les données de communication utilisent simultanément le même support de transmission dans le câble électroporteur 203, en l'occurrence une ligne de transmission unique tel qu'un câble coaxial, sans mettre en danger les équipements en charge de la génération de chacun de ces signaux. On entend par simultanément le fait que chaque signal puisse être transmis de manière continue, sans être interrompu par les autres signaux.

La partie immergée 202, est configurée pour transformer les signaux à émettre 211 qu'elle reçoit de la première partie 201 en ondes acoustiques émises dans l'eau, et pour recevoir les ondes acoustiques se propageant dans l'eau. A cet effet, la seconde partie comprend donc des transducteurs acoustiques, certains étant configurés pour émettre et d'autres étant configurés pour acquérir des signaux acoustiques. Les transducteurs acoustiques sont le plus souvent des éléments piézoélectriques dont le comportement électrique est majoritairement capacitif. La mise en œuvre d'un réseau d'accord/adaptation des transducteurs acoustiques (en anglais matching) permet de minimiser les pertes de puissance sur les signaux à émettre.

La deuxième partie 202 comprend également l'électronique nécessaire à l'amplification des signaux acquis par les transducteurs acoustiques fonctionnant en réception, leur numérisation éventuelle, et leur transmission vers la partie émergée 201 du sonar.

Enfin, la partie immergée 202 du sonar dispose également de moyens de séparation 223 des différents signaux. Ces moyens de séparation permettent de récupérer séparément un signal d'alimentation électrique 220, des signaux à émettre 221 et des données de communication 222.

Le dispositif selon l'invention permet donc un fonctionnement plus souple que les dispositifs de l'état de l'art car tous les signaux à transmettre sur le câble sont disponibles à chaque instant, de manière transparente et sans interruption. Il présente ainsi de nombreux avantages parmi lesquels :
- l'ensemble des signaux empruntent la même ligne de transmission, ce qui permet de maitriser le diamètre et la masse du câble électroporteur 203. Un simple câble coaxial ou une paire torsadée peut ainsi faire office de ligne de transmission,
- le dispositif ne nécessite pas la mise en œuvre d'élément de commutation électromécaniques (comme par exemple un relais de puissance) dans sa partie immergée, ce qui réduit son volume, sa masse, son coût, ni de synchroniser la transmission des signaux et les éléments de commutation, ce qui améliore la fiabilité du système et le simplifie. La circuiterie de commande peut alors être supprimée de la partie immergée,
- la continuité temporelle du signal d'alimentation électrique 220 est assurée, la partie immergée pouvant alors s'affranchir de l'utilisation d'éléments de stockage de l'énergie (batteries), ce qui réduit son volume, sa masse, son coût, et améliore sa fiabilité,
- la continuité temporelle des données de communication 222 est assurée, ce qui permet d'augmenter la quantité de données transportées, et donc le nombre de capteurs acoustiques de la partie immergée,
- l'ensemble des avantages ci-dessus permet de réduire la masse et l'encombrement de la partie immergée du sonar, et donc ses performances hydrodynamiques, ainsi que la taille du câble électroporteur, ainsi que celle du touret nécessaire pour l'enrouler.

Le signal portant les données de communications peut indifféremment prendre la forme d'un signal analogique ou numérique. N'importe quel schéma de modulation/codage peut être utilisé. Avantageusement, le sonar utilise une modulation à moyenne nulle afin de ne pas présenter de composante continue. En effet, une telle composante se superposerait au signal d'alimentation. Avantageusement encore, il met en œuvre des codes correcteurs d'erreurs, afin d'améliorer la qualité de la transmission sur un câble où les performances électriques peuvent s'avérer faibles et sont sujettes à variabilité, notamment de par la longueur du câble, son état enroulé/déroulé, ou son vieillissement. Avantageusement, les signaux de communication sont modulés selon une technique de multiplexage par répartition en fréquences orthogonales, comme par exemple une modulation OFDM. En effet, un tel schéma de modulation permet d'atteindre des débits très élevés pour une occupation spectrale donnée, et est compatible de l'utilisation de codes correcteurs d'erreurs permettant d'améliorer la qualité de la transmission. L'OFDM présente en outre une très forte flexibilité d'adaptation de la ressource spectrale, ce qui permet d'adapter dynamiquement l'allocation de la ressource fréquentielle aux deux sens de transmission.

Un exemple de mise en œuvre de l'invention consiste à mettre en place, dans chacune des parties du sonar, des éléments de filtrage adaptés à chacun des signaux transmis, permettant d'une part leur combinaison sans interférences, et d'autre part leur séparation. Plus précisément, selon un mode de réalisation, ces éléments peuvent être un filtre passe-bas pour le signal d'alimentation électrique, un filtre passe-bande pour les signaux à émettre, et un filtre passe-bande ou passe-haut pour le signal transportant les données de communication. Ces filtres peuvent être conçus à base de réseaux de résistances, inductances et condensateurs. Cependant, s'agissant d'électronique de puissance, les composants doivent supporter des niveaux de puissance et des tensions très élevées à des basses fréquences (quelques centaines de kilohertz), ce qui impose un volume et une masse significatifs. Parmi les composants mis en œuvre dans les filtres, les inductances forment généralement la plus grande contribution en volume et en masse, ce qui se répercute alors sur le dimensionnement du câble 203 et du touret associé. En outre, ces composants sont très couteux. Il est donc nécessaire de limiter leur nombre, en particulier dans la partie immergée du sonar.

A cet effet, la figure 3 décrit les éléments principaux d'un sonar selon un mode de mise en œuvre de l'invention, optimisé afin de limiter le nombre d'éléments utilisés. Le mode de réalisation présenté exploite les importants écarts de fréquence qui existent entre les signaux à transmettre. A cet effet, des composants jouant le rôle de moyen de combinaison sont implémentés dans la partie émergée. Ces composants sont configurés pour que le câble électroporteur 203 présente l'impédance la mieux adaptée à la fréquence de chacun des signaux 210, 211 et 212, de manière à ce que ces signaux soient guidés vers le câble électroporteur 203, limitant ainsi au maximum tout retour de ces signaux vers les éléments de génération respectifs. De même, dans la partie immergée, des composants jouant le rôle de moyen de séparation sont implémentés. Ces composants sont configurés pour présenter des impédances adaptées aux fréquences des signaux afin de conduire séparément chaque signal transporté par le câble électroporteur 203 vers sa destination.

Tout comme la figure 2, la figure 3 représente un sonar comprenant une première partie émergée 201, destinée à être embarquée à bord d'un navire, d'un aéronef ou d'un sous-marin, une deuxième partie 202, destinée à être immergée sous l'eau afin d'émettre les signaux acoustiques permettant la détection de cibles, les deux parties étant reliées par un câble électroporteur 203 qui assure le maintien de la partie immergée et la transmission de signaux entre la partie émergée et la partie immergée du sonar.

La partie émergée 201 comprend un émetteur TX destiné à générer les signaux à émettre. Ces signaux ont généralement une puissance de quelques kilowatts, modulés dans une bande de fréquence allant du kilohertz, pour les sonars à très basses fréquences, à quelques centaines de kilohertz, pour les sonars à hautes fréquences. La fréquence porteuse des signaux à émettre peut être amenée à changer au cours du temps.

La partie immergée comprend également une source d'alimentation électrique A1, représentée dans la figure comme une source de courant continu, et un modem 310, qui génère/reçoit le signal transportant les données de communication. Le modem 310 réalise également la synchronisation du signal transportant les données de communication sur les voies montantes et descendantes. La source d'alimentation électrique A1 peut être une source d'alimentation continue ou alternative, appartenant au sonar ou provenant d'une source externe à laquelle le sonar est relié.

La partie émergée 201 comprend des moyens 213 permettant la combinaison du signal 210 délivré par l'alimentation A1 avec les signaux 211 délivrés par l'émetteur TX et le signal 212 transportant les données de communications fournies par le modem 310.

A cet effet, dans ce mode de réalisation, la partie émergée 201 comprend un transformateur TR1, dont le rôle est d'élever la tension des signaux à émettre, et donc d'adapter l'impédance de travail de l'électronique à celle des transducteurs acoustiques afin de limiter les pertes de puissance de ces signaux lors de leur transmission sur toute la longueur du câble électroporteur 203. La mise en œuvre du transformateur TR1 n'est pas strictement indispensable, mais elle permet d'améliorer considérablement la transmission des signaux à émettre entre la première et la deuxième partie du sonar et de coupler le signal d'alimentation électrique avec les signaux à émettre. Elle a donc un rôle double car elle réalise l'élévation de la tension des signaux à émettre et contribue en même temps à la sommation du signal d'alimentation électrique avec les signaux à émettre.

La source d'alimentation électrique A1 est connectée via le secondaire du transformateur TR1. Afin que la tension d'alimentation électrique se superpose avec la tension délivrée par le transformateur, une capacité C1 est montée en parallèle avec la source d'alimentation électrique. Sans cette capacité, la tension délivrée par le transformateur reviendrait dans l'alimentation électrique, ce qui aurait pour effet que la partie immergée du sonar ne recevrait plus ni alimentation électrique ni signaux à émettre, et détruirait probablement l'alimentation électrique A1. La capacité C1 montée en parallèle de la source d'alimentation électrique permet donc de coupler les signaux à émettre avec le signal d'alimentation électrique.

Les données de communication sont générées/reçues par un modem 310, et reliées aux autres signaux à travers un filtre passe-haut 311 (ou passe-bande). Ce filtre passe-haut, raccordé de manière à séparer le modem 310 de l'entrée du câble 203, présente une impédance bien plus élevée que l'entrée du câble aux fréquences du signal d'alimentation électrique et des signaux à émettre. Ainsi, il permet d'empêcher que le signal couplé signaux à émettre et signal d'alimentation électrique ne revienne vers le modem 310, ce qui le dirige vers le câble électroporteur 203 et donc vers la partie immergée 202 du sonar. Avantageusement, le filtre passe-haut est conçu de manière à supporter les tensions élevées des signaux à émettre, comme par exemple en utilisant des composants conçus pour tenir des niveaux de tension élevés, ou en assemblant en série des éléments conçus pour de plus bas niveaux de tension.

Une inductance L2 est raccordée entre le câble 203 et le transformateur TR1, de manière à séparer la partie réalisant la combinaison des signaux à émettre avec le signal d'alimentation électrique, de la partie dédiée à la transmission du signal transportant les données de communication. Cette inductance présente une impédance élevée aux fréquences utilisées par le signal transportant les données de communication, de manière à empêcher que ce signal ne revienne vers l'émetteur et la source d'alimentation électrique, ce qui le guide vers le câble 203 et donc vers la partie immergée 202 du sonar. Les tensions des trois types de signaux transmis se superposent alors.

Dans ce mode de réalisation, les moyens de combinaison 213 des signaux comprennent donc la capacité C1, le filtre passe-haut 311 et l'inductance L2.

Le câble électroporteur 203 assure le maintien mécanique de la partie immergée 202, ainsi que la transmission des signaux combinés à travers une unique ligne de transmission.

La partie immergée 202 comprend des moyens 223 de séparation des signaux transmis sur le câble électroporteur 203. Dans le mode de réalisation décrit en figure 3, ces moyens 223 comprennent un filtre passe-haut 320, comparable au filtre passe-haut 311, qui présente une impédance élevée à la fréquence du signal d'alimentation électrique et à la fréquence des signaux à émettre, afin de restreindre la propagation des signaux à émettre et du signal d'alimentation électrique en atténuant les fréquences basses tout en laissant passer les signaux hautes fréquences. Le rôle du filtre passe-haut est de bloquer totalement la propagation des signaux à émettre et du signal d'alimentation électrique, cependant des résidus de ces signaux peuvent néanmoins passer à travers le filtre, c'est pourquoi on dit qu'il « restreint » la propagation de ces signaux. Il permet donc de séparer le signal transportant les données de communication des autres signaux. Avantageusement, tout comme le filtre passe-haut 311 de la première partie 201 du sonar, le filtre passe-haut 320 de la deuxième partie 202 du sonar est conçu de manière à supporter les tensions élevées des signaux à émettre. Il est disposé entre le câble électroporteur 203 et un modem 321, pendant du modem 310 de la partie émergée 201, configuré pour se synchroniser avec le modem 310 afin de générer/recevoir le signal transportant les données de communications. Le modem est relié à des transducteurs acoustiques de réception (non représentés) par l'intermédiaire d'amplificateurs et le cas échéant de convertisseurs analogique/numérique (non représentés).

Les moyens de séparation des signaux 223 de ce mode de réalisation comprennent également deux inductances L1 et L3, qui présentent une impédance élevée aux fréquences du signal transportant les données de communication, et une capacité C2. L'inductance L1 est montée en série avec la capacité C2. Le signal d'alimentation électrique A2 est récupéré aux bornes de la capacité C2. L'inductance L1 sépare la capacité C2 du câble électroporteur 203. L'inductance L3 est montée en série avec le ou les transducteurs acoustiques Tr, qu'elle sépare du câble électroporteur 203. Les inductances L1 et L3 présentent une impédance élevée à la fréquence du signal transmettant les données de communications, afin d'empêcher la propagation de ce signal vers les transducteurs acoustiques d'émission Tr et vers les composants permettant la récupération de l'alimentation électrique A2, c'est-à-dire la capacité C2, et le cas échéant la diode D1 et la capacité C3. En effet, si en pratique le signal transportant les données de communication ne vient pas perturber le fonctionnement des transducteurs acoustiques et de l'alimentation électrique, restreindre la propagation de ce signal au niveau de L1 et L3 permet d'orienter toute la puissance du signal transportant les données de communication vers le modem 321. En outre, les inductances L1 et L3 guident les communications montantes émises par le modem 321 à destination du modem 310 vers le câble électroporteur, et non vers les transducteurs acoustiques Tr ou la partie permettant la récupération de l'alimentation électrique A2.

L'inductance L1 montée en parallèle du ou des transducteurs acoustiques, l'inductance L3, montée en série du ou des transducteurs acoustiques, et le ou les transducteurs acoustiques qui se comportent comme des éléments capacitifs, forment avantageusement un résonateur LC accordé à la fréquence des signaux émis par le sonar, afin de ne pas perdre de puissance lors de l'émission des signaux acoustiques. Les inductances L1 et L3 forment donc des moyens d'accord/adaptation du ou des transducteurs acoustique d'émission Tr.

En outre, l'inductance L1 est configurée pour présenter une impédance suffisante à la fréquence des signaux à émettre pour pouvoir récupérer le signal d'alimentation seul aux bornes du condensateur C2.

Dans un mode de réalisation, la valeur de l'inductance L1 montée en parallèle du ou des transducteurs acoustiques d'émission Tr est choisie en fonction de l'impédance des transducteurs acoustiques d'émission à la fréquence des signaux à émettre, de manière à ce qu'elle réalise principalement l'accord/adaptation du ou des transducteurs acoustiques d'émission Tr. La valeur de l'inductance L3 est choisie inférieure à celle de L1, de manière à ne pas désaccorder le réseau LC formé par L1 et le ou les transducteurs acoustiques d'émission. Le rôle joué par l'inductance L1 est alors double : elle permet la récupération du signal d'alimentation électrique en filtrant une partie des signaux à émettre et les signaux de communication, et contribue en même temps à l'accord/adaptation des transducteurs acoustiques d'émission Tr. En utilisant la même inductance L1 pour filtrer le signal d'alimentation électrique et pour réaliser l'accord/adaptation des transducteurs acoustiques utilisés à l'émission, le nombre de composants nécessaires pour implémenter la partie immergée du sonar selon ce mode de réalisation de l'invention est réduit au minimum.

L'inductance L3 ne bloque pas la propagation du signal d'alimentation vers le ou les transducteurs acoustiques Tr, mais ces éléments sont essentiellement capacitifs et ne consomment pas de tension continue. La puissance du signal d'alimentation se propage alors principalement à travers L1 vers le condensateur C2 (et le condensateur C3 le cas échéant).

Dans ce mode de réalisation, les moyens de séparation 223 des signaux comprennent donc la capacité C2, le filtre passe-haut 320 et les inductances L1 et L3.

Le montage de la figure 3, en particulier le positionnement des inductances L1 et L3, n'apparaitrait pas de manière évidente à l'homme du métier. En effet, le dimensionnement des deux inductances doit satisfaire un certain nombre d'exigences qui peuvent paraitre contradictoires au premier abord, à savoir :
i. L3 doit présenter une impédance bien plus élevée que l'impédance caractéristique du câble 203 à la fréquence minimale utilisée par le signal transportant les données de communication, de manière à ne pas désaccorder le filtre passe-haut 320,
ii. l'impédance de L3 ne doit pas être trop élevée à la fréquence des signaux à émettre, afin de ne pas perdre trop de puissance dans le ou les transducteur(s) acoustique(s) d'émission,
iii. l'impédance de L1 doit être bien plus élevée que l'impédance caractéristique du câble 203 à la fréquence minimale utilisée par le signal transportant les données de communication, et supérieure à celle de L3 à la fréquence des signaux à émettre,
iv. les valeurs de L1 et L3 doivent être choisies de manière à réaliser l'accord/adaptation des transducteurs acoustiques d'émission Tr.

En pratique, on constate qu'il est possible de déterminer des valeurs de L1 et L3 qui satisfont l'ensemble des contraintes ci-dessus.

Avantageusement, la partie immergée 202 peut disposer d'une diode D1 et d'une capacité C3, disposées de manière à filtrer le signal d'alimentation électrique. Ce filtrage permet de lisser les fluctuations du signal d'alimentation électrique dues aux résidus des signaux à émettre qui passent par L1.

Le montage représenté en figure 3 limite au maximum le nombre d'éléments électroniques nécessaires à la mise en œuvre d'un sonar selon l'invention, permettant ainsi de réduire son coût, mais surtout la masse et le volume de la partie immergée 202 du sonar. Bien entendu, la mise en œuvre décrite pour la première partie 201 du sonar et la mise en œuvre décrite pour la deuxième partie 202 du sonar sont indépendantes et peuvent être envisagées indépendamment.

## Revendications

1. Sonar comprenant une première partie (201) et une deuxième partie (202) reliées par un câble électroporteur (203) configuré pour supporter mécaniquement la deuxième partie et permettre aux deux parties du sonar d'échanger des signaux comprenant :
- un signal unidirectionnel dit signal d'alimentation électrique (210, 220), par lequel la première partie transmet une alimentation électrique à la deuxième partie,
- des signaux unidirectionnels analogiques dits signaux à émettre (211, 221), transmis par la première partie à la deuxième partie en vue de leur émission sous forme d'ondes acoustiques, et
- un signal bidirectionnel transportant des données de communication (212, 222) échangées entre les deux parties,
le sonar étant **caractérisé en ce que** :
- la première partie comprend des moyens de combinaison (213) des signaux configurés pour que le signal d'alimentation électrique, les signaux à émettre et le signal transportant des données de communications soient transmis simultanément et dans des bandes de fréquences différentes sur le câble électroporteur,
- la deuxième partie comprend des moyens de séparation (223) permettant la récupération de chacun des signaux transmis sur le câble électroporteur, un ou plusieurs transducteurs acoustiques d'émission (Tr), et des moyens d'accord/adaptation (L1) du ou des transducteurs acoustiques d'émission.

2. Sonar selon la revendication précédente, dans lequel les moyens de combinaison comprennent des composants (TR1, C1) configurés pour coupler les signaux à émettre avec le signal d'alimentation électrique.

3. Sonar selon la revendication 2, dans lequel les composants configurés pour coupler les signaux à émettre avec le signal d'alimentation électrique comprennent un transformateur (TR1) configuré pour élever la tension des signaux à émettre et les coupler avec le signal d'alimentation électrique.

4. Sonar selon l'une des revendications précédentes, dans lequel les moyens de combinaison comprennent des composants (L2, 311) configurés pour guider la propagation des signaux en direction du câble électroporteur (203).

5. Sonar selon la revendication 4, dans lequel les composants configurés pour guider la propagation des signaux en direction du câble électroporteur (203) comprennent :
- une inductance (L2) configurée pour laisser passer le signal d'alimentation électrique (210) et les signaux à émettre (211) et pour restreindre la propagation du signal (212) transportant les données de communications, ladite inductance étant raccordée entre d'une part le câble électroporteur, et d'autre part des éléments de génération des signaux à émettre (TX) et de génération du signal d'alimentation électrique (A1), et
- un filtre (311) configuré pour laisser passer le signal transportant les données de communications et pour restreindre la propagation du signal d'alimentation électrique et des signaux à émettre, ledit filtre étant raccordé entre le câble électroporteur et un générateur du signal transportant les données de communications (310).

6. Sonar selon l'une des revendications précédentes, dans lequel les moyens de séparation (223) comprennent une inductance (L1) configurée pour séparer le signal d'alimentation électrique des autres signaux transportés par le câble électroporteur (203) et contribuer à l'accord/adaptation du ou des transducteurs acoustiques.

7. Sonar selon la revendication 6, dans lequel l'inductance (L1) configurée pour séparer le signal d'alimentation électrique des autres signaux et pour réaliser l'accord/adaptation du ou des transducteurs acoustiques d'émission est montée en parallèle du ou des transducteurs acoustiques (Tr) et est raccordée entre le câble électroporteur (203) et une capacité (C2) avec laquelle elle est montée en série, le signal d'alimentation électrique étant récupéré aux bornes de ladite capacité.

8. Sonar selon l'une des revendications 6 et 7, dans lequel l'inductance (L1) configurée pour séparer le signal d'alimentation électrique des autres signaux et pour réaliser l'accord/adaptation du ou des transducteurs acoustiques d'émission est configurée pour laisser passer le signal d'alimentation électrique (220) et pour restreindre la propagation du signal (222) transportant les données de communications et les signaux à émettre (221).

9. Sonar selon l'une des revendications précédentes, dans lequel les moyens de séparation (223) comprennent :
- une inductance (L3) configurée pour laisser passer les signaux à émettre (221) et pour restreindre la propagation du signal (222) transportant les données de communications, ladite inductance étant raccordée entre le câble électroporteur (203) et le ou les transducteurs acoustiques d'émission (Tr), et
- un filtre (320) configuré pour laisser passer le signal transportant les données de communications et pour restreindre la propagation du signal d'alimentation électrique (211) et des signaux à émettre, ledit filtre étant raccordé entre le câble électroporteur et élément de modulation/démodulation du signal transportant les données de communications (321).

10. Sonar selon l'une des revendications précédentes, dans lequel le signal transportant les données de communication est modulé par une modulation à moyenne nulle.

11. Sonar selon l'une des revendications précédentes, dans lequel la modulation du signal transportant les données de communication utilise un multiplexage par répartition en fréquences orthogonales.

## Patentansprüche

1. Sonar, das einen ersten Teil (201) und einen zweiten Teil (202) umfasst, die durch ein Stromkabel (203) verbunden sind, das zum mechanischen Tragen des zweiten Teils konfiguriert ist und es zulässt, dass die beiden Teile des Sonars Signale austauschen, umfassend:
- ein unidirektionales Signal, Stromversorgungssignal (210, 220) genannt, durch das der erste Teil dem zweiten Teil Strom zuführt,
- analoge unidirektionale Signale, zu sendende Signale (211, 221) genannt, die vom ersten Teil zum zweiten Teil zwecks ihrer Aussendung in Form von akustischen Wellen übertragen werden, und
- ein bidirektionales Signal, das Kommunikationsdaten (212, 222) transportiert, die zwischen den beiden Teilen ausgetauscht werden,
wobei das Sonar **dadurch gekennzeichnet ist, dass**:
- der erste Teil Signalkombinationsmittel (213) umfasst, so konfiguriert, dass das Stromversorgungssignal, die zu sendenden Signale und das Kommunikationsdaten transportierende Signal gleichzeitig und in unterschiedlichen Frequenzbändern über das Stromkabel übertragen werden,
- der zweite Teil Trennmittel (223), die die Rückgewinnung jedes der auf dem Stromkabel übertragenen Signale ermöglichen, einen oder mehrere akustische Sendewandler (Tr) und Abstimmungs-/Anpassungsmittel (L1) des oder der akustischen Sendewandler(s) umfasst.

2. Sonar nach dem vorhergehenden Anspruch, wobei die Kombinationsmittel Komponenten (TR1, C1) umfassen, die zum Koppeln der zu sendenden Signale mit dem Stromversorgungssignal konfiguriert sind.

3. Sonar nach Anspruch 2, wobei die zum Koppeln der zu sendenden Signale mit dem Stromversorgungssignal konfigurierten Komponenten einen Transformator (TR1) umfassen, der zum Erhöhen der Spannung der zu sendenden Signale und zu deren Kopplung mit dem Stromversorgungssignal konfiguriert ist.

4. Sonar nach einem der vorhergehenden Ansprüche, wobei die Kombinationsmittel Komponenten (L2, 311) umfassen, die zum Leiten der Ausbreitung der Signale in Richtung des Stromkabels (203) konfiguriert sind.

5. Sonar nach Anspruch 4, wobei die zum Leiten der Ausbreitung der Signale in Richtung des Stromkabels (203) konfigurierten Komponenten Folgendes umfassen:
- eine Induktivität (L2), die zum Durchlassen des Stromversorgungssignals (210) und der zu sendenden Signale (211) und zum Einschränken der Ausbreitung des die Kommunikationsdaten transportierenden Signals (212) konfiguriert ist, wobei die Induktivität zwischen dem Stromkabel einerseits und Elementen zur Erzeugung der zu sendenden Signale (TX) und zur Erzeugung des Stromversorgungssignals (A1) andererseits geschaltet ist, und
- ein Filter (311), das zum Durchlassen des die Kommunikationsdaten transportierenden Signals und zum Einschränken der Ausbreitung des Stromversorgungssignals und der zu sendenden Signale konfiguriert ist, wobei das Filter zwischen dem Stromkabel und einem Generator (310) des die Kommunikationsdaten transportierenden Signals geschaltet ist.

6. Sonar nach einem der vorhergehenden Ansprüche, wobei die Trennmittel (223) eine Induktivität (L1) umfassen, die zum Trennen des Stromversorgungssignals von anderen durch das Stromkabel (203) transportierten Signalen und zum Beitragen zur Abstimmung/Anpassung des/der akustischen Wandler(s) konfiguriert ist.

7. Sonar nach Anspruch 6, wobei die Induktivität (L1), die zum Trennen des Stromversorgungssignals von den anderen Signalen und zum Bewirken des Abstimmens/Anpassens des/der akustischen Sendewandler(s) konfiguriert ist, parallel zu dem/den akustischen Wandler(n) (Tr) montiert und zwischen dem Stromkabel (203) und einer Kapazität (C2) geschaltet ist, mit der sie in Reihe geschaltet ist, wobei das Stromversorgungssignal an den Anschlüssen der Kapazität zurückgewonnen wird.

8. Sonar nach einem der Ansprüche 6 und 7, wobei die Induktivität (L1), die zum Trennen des Stromversorgungssignals von den anderen Signalen und zum Bewirken des Abstimmens/Anpassens des/der akustischen Sendewandler(s) konfiguriert ist, zum Durchlassen des Stromversorgungssignals (220) und zum Einschränken der Ausbreitung des die Kommunikationsdaten und die zu sendenden Signale (221) transportierenden Signals (222) konfiguriert ist.

9. Sonar nach einem der vorhergehenden Ansprüche, wobei die Trennmittel (223) Folgendes umfassen:
- eine Induktivität (L3), die zum Durchlassen der zu sendenden Signale (221) und zum Einschränken der Ausbreitung des die Kommunikationsdaten tragenden Signals (222) konfiguriert ist, wobei die Induktivität zwischen dem Stromkabel (203) und dem oder den akustischen Sendewandler(n) (Tr) geschaltet ist, und
- ein Filter (320), das zum Durchlassen des die Kommunikationsdaten transportierenden Signals und zum Einschränken der Ausbreitung des Stromversorgungssignals (211) und der zu sendenden Signale konfiguriert ist, wobei das Filter zwischen dem Stromkabel und dem Modulations-/Demodulationselement (321) für das die Kommunikationsdaten transportierende Signal geschaltet ist.

10. Sonar nach einem der vorhergehenden Ansprüche, wobei das die Kommunikationsdaten transportierende Signal durch eine Null-Durchschnitts-Modulation moduliert wird.

11. Sonar nach einem der vorhergehenden Ansprüche, wobei die Modulation des die Kommunikationsdaten transportierenden Signals orthogonales Frequenzmultiplexen benutzt.

## Claims

1. A sonar comprising a first portion (201) and a second portion (202) which are connected by a self-supporting electrical cable (203) which is configured to mechanically support the second portion and to enable the two portions of the sonar to exchange signals, comprising:
- a unidirectional signal which is referred to as an electrical power supply signal (210, 220) via which the first portion transmits an electrical power supply to the second portion,
- analogue unidirectional signals which are referred to as signals (211, 221) to be transmitted and which are transmitted by the first portion to second portion in order to be transmitted in the form of sound waves, and
- a bidirectional signal which transports communication data (212, 222) exchanged between the two portions,
the sonar being **characterised in that**:
- the first portion comprises combination means (213) for the signals which are configured so that the electrical power supply signal, the signals to be transmitted and the signal transporting communication data are transmitted simultaneously and in different frequency bands on the self-supporting electrical cable,
- the second portion comprises separation means (223) which enable each of the signals transmitted on the self-supporting electrical cable to be recovered, one or more acoustic transmission transducers (Tr), and means (L1) for tuning/adapting the acoustic transmission transducer(s).

2. The sonar according to the preceding claim, wherein the combination means comprise components (TR1, C1) which are configured to couple the signals to be transmitted to the electrical power supply signal.

3. The sonar according to claim 2, wherein the components which are configured to couple the signals to be transmitted to the electrical power supply signal comprise a transformer (TR1) which is configured to increase the voltage of the signals to be transmitted and to couple them to the electrical power supply signal.

4. The sonar according to any one of the preceding claims, wherein the combination means comprise components (L2, 311) which are configured to guide the propagation of the signals in the direction of the self-supporting electrical cable (203).

5. The sonar according to claim 4, wherein the components which are configured to guide the propagation of the signals in the direction of the self-supporting electrical cable (203) comprise:
- an inductance (L2) which is configured to allow the electrical power supply signal (210) and the signals (211) to be transmitted to pass and to restrict the propagation of the signal (212) transporting the communication data, the inductance being connected between, on the one hand, the self-supporting electrical cable and, on the other hand, elements (TX) for generating the signals to be transmitted and for generating the electrical power supply signal (A1), and
- a filter (311) which is configured to allow the signal transporting the communication data to pass and to restrict the propagation of the electrical power supply signal and the signals to be transmitted, the filter being connected between the self-supporting electrical cable and a generator (310) for the signal transporting the communication data.

6. The sonar according to any one of the preceding claims, wherein the separation means (223) comprise an inductance (L1) which is configured to separate the electrical power supply signal from the other signals transported by the self-supporting electrical cable (203) and to contribute to the tuning/adaptation of the acoustic transducer(s).

7. The sonar according to claim 6, wherein the inductance (L1) which is configured to separate the electrical power supply signal from the other signals and to produce the tuning/adaptation of the acoustic transmission transducer(s) is mounted in parallel with the acoustic transducer(s) (Tr) and is connected between the self-supporting electrical cable (203) and a capacitance (C2) with which it is mounted in series, the electrical power supply signal being recovered at the terminals of the capacitance.

8. The sonar according to one of claims 6 and 7, wherein the inductance (L1) which is configured to separate the electrical power supply signal from the other signals and to produce the tuning/adaptation of the acoustic transmission transducer(s) is configured to allow the electrical power supply signal (220) to pass and to restrict the propagation of the signal (222) which transports the communication data and the signals (221) to be transmitted.

9. The sonar according to any one of the preceding claims, wherein the separation means (223) comprise:
- an inductance (L3) which is configured to allow the signals (221) to be transmitted to pass and to restrict the propagation of the signal (222) which transports the communication data, the inductance being connected between the self-supporting electrical cable (203) and the acoustic transmission transducer(s) (Tr), and
- a filter (320) which is configured to allow the signal which transports the communication data to pass and to restrict the propagation of the electrical power supply signal (211) and the signals to be transmitted, the filter being connected between the self-supporting electrical cable and the element (321) for modulation/demodulation of the signal which transports the communication data.

10. The sonar according to any one of the preceding claims, wherein the signal which transports the communication data is modulated by a zero mean modulation.

11. The sonar according to any one of the preceding claims, wherein the modulation of the signal transporting the communication data uses orthogonal frequency-division multiplexing.
